# EUROPÄISCHE PATENTSCHRIFT

(11) **EP 2 222 561 B1**
(45) Veröffentlichungstag und Bekanntmachung des Hinweises auf die Patenterteilung: **04.07.2012**
(21) Anmeldenummer: 08865024.7
(22) Anmeldetag: 21.11.2008
(51) Int. Cl.: B64D 33/10, B64C 21/04, B64D 13/00

(54) **FLUGZEUGKÜHLSYSTEM**
AIRCRAFT COOLING SYSTEM
SYSTÈME DE REFROIDISSEMENT D'AVION

(30) Priorität: 20.12.2007 DE 102007061588; 20.12.2007 US 15232
(43) Veröffentlichungstag der Anmeldung: 01.09.2010
(73) Patentinhaber: Airbus Operations GmbH, 21129 Hamburg (DE)
(72) Erfinder: BAUMGARDT, Torben, 21684 Stade (DE); STOLTE, Ralf-Henning, 22525 Hamburg (DE); PIEZUNKA, Volker, 22559 Hamburg (DE); WOLLRAB, Uwe, 29614 Soltau (DE)
(74) Vertreter: Schicker, Silvia
(86) Internationale Anmeldenummer: PCT/EP2008/009882
(87) Internationale Veröffentlichungsnummer: WO 2009/080168

(56) Entgegenhaltungen:
- EP-A- 0 968 918
- EP-A- 1 860 026
- US-A- 4 953 812
- US-A1- 2002 023 730
- US-A1- 2006 191 676

## Beschreibung

Die Erfindung betrifft ein Flugzeug mit einem Flugzeugkühlsystem, das insbesondere zur Kühlung eines an Bord des Flugzeugs eingesetzten Brennstoffzellensystems geeignet ist.

Brennstoffzellensysteme ermöglichen es, emissionsarm und mit einem hohen Wirkungsgrad elektrischen Strom zu erzeugen. Daher gibt es gegenwärtig Bestrebungen, Brennstoffzellensysteme in verschiedenen mobilen Anwendungen, wie z.B. in der Automobiltechnik oder in der Luftfahrt, zur Erzeugung elektrischer Energie heranzuziehen. Beispielsweise ist es denkbar, in einem Flugzeug die derzeit zur Bordstromversorgung eingesetzten, von den Haupttriebwerken oder dem Hilfstriebwerk (Auxiliary Power Unit, APU) angetriebenen Generatoren durch ein Brennstoffzellensystem zu ersetzen. Darüber hinaus könnte ein Brennstoffzellensystem auch zur Notstromversorgung des Flugzeugs verwendet werden und die bisher als Notstromaggregat eingesetzte Ram Air Turbine (RAT) ersetzen.

Neben elektrischer Energie erzeugt eine Brennstoffzelle im Betrieb thermische Energie, die mit Hilfe eines Kühlsystems von der Brennstoffzelle abgeführt werden muss, um eine Überhitzung der Brennstoffzelle zu verhindern. Ein in einem Flugzeug, beispielsweise zur Bordstromversorgung, eingesetztes Brennstoffzellensystem muss so ausgelegt sein, dass es dazu in der Lage ist, einen hohen Bedarf an elektrischer Energie zu decken. Eine hinsichtlich der Erzeugung elektrischer Energie leistungsstarke Brennstoffzelle generiert jedoch auch eine große Menge thermischer Energie und hat daher einen hohen Kühlbedarf. Darüber hinaus ist an Bord eines Flugzeugs eine Vielzahl weiterer technischer Einrichtungen vorgesehen, die Wärme erzeugen und die zur Gewährleistung einer sicheren Funktionsweise gekühlt werden müssen. Zu diesen technischen Einrichtungen gehören beispielsweise die Klimaaggregate oder die elektronischen Steuerkomponenten des Flugzeugs.

Die EP 0 968 918 A2 offenbart ein System zur passiven Kühlung einer APU eines Flugzeugs. Das Kühlsystem umfasst eine Kühlluftzufuhröffnung, die im Bereich eines Heckspiegels des Flugzeugs ausgebildet ist. Ein Kühlluftzufuhrkanal verbindet die Kühlluftzufuhröffnung mit der APU, so dass von den Kompressoren der APU Kühlluft aus der Flugzeugumgebung abgesaugt und zu kühlenden Komponenten der APU, insbesondere einem Ölkühler zugeführt werden kann. Von der APU erzeugte Abgase werden durch einen Abgaskanal abgeleitet und im Bereich des Heckspiegels des Flugzeugs an die Umgebung abgeführt. Im Bereich eines Ejektors der APU wird durch den Abgasstrom der APU in dem die APU umgebenden Flugzeugbereich ein Unterdruck erzeugt, der bewirkt, dass die über die Kühlluftrufuhröffnung zugeführte Kühlluft nach dem Durchströmen des Ölkühlers in den Abgaskanal der APU gesaugt und gemeinsam mit den Abgasen der APU im Bereich des Flugzeugheckspiegels an die Umgebung abgeführt wird.

Aus der US 2002/0023730 A1 ist eine Kühlanlage zum Einsatz in schweren Lastkraftwagen bekannt, die einen kastenförmigen Aufbau aufweist. Der Kühlanlage wird über einen Kühllufteinlass Kühlluft zugeführt, die anschließend an Seitenflächen der kastenförmigen Kühlanlage angeordnete Wärmetauscher durchströmt.

Die US 4,953,812 veranschaulicht die Druckverteilung im Heckbereich eines Flugzeugs in Abhängigkeit davon, ob das Flugzeug einen Schubpropeller umfasst oder nicht.

Der vorliegenden Erfindung liegt die Aufgabe zugrunde, ein Flugzeug mit einem kompakt aufgebauten Flugzeugkühlsystem bereitzustellen, das auch bei hohen Umgebungstemperaturen eine zuverlässige und effiziente Abfuhr großer Wärmelasten von einer wärmeerzeugenden Einrichtung, beispielsweise einem Brennstoffzellensystem, an Bord des Flugzeugs ermöglicht.

Diese Aufgabe wird durch ein Flugzeug gemäß dem Anspruch 1 gelöst.

Ein Flugzeugkühlsystem des erfindungsgemäßen Flugzeugs umfasst ein Kühlelement, das ein Gehäuse, einen in dem Gehäuse ausgebildeten Kühllufteinlass sowie eine Mehrzahl von an Seitenflächen des Gehäuses angeordneten Wärmetauschern umfasst, die von über den Kühllufteinlass zugeführter Kühlluft durchströmbar sind. Das Kühlelement kann beispielsweise ein im Wesentlichen würfel- oder quaderförmig ausgebildetes Gehäuse aufweisen. Der Kühllufteinlass kann dann beispielsweise in einer Seitenfläche des Gehäuses ausgebildet sein, während an mehreren oder allen anderen Seitenflächen des Gehäuses Wärmetauscher angeordnet sind.

Im Verhältnis zu seinem kompakten Bauvolumen weist das Kühlelement eine große Wärmeübertragerfläche auf und zeichnet sich daher durch eine exzellente Kühlleistung aus. Darüber hinaus können durch die Verteilung der Kühlluft auf eine große Wärmeübertragerfläche Druckverluste in der Kühlluftströmung beim Durchströmen des Kühlelements in vorteilhafter Weise gering gehalten werden. Das erfindungsgemäße Flugzeugkühlsystem ist daher hocheffizient betreibbar und zur Abfuhr auch großer Wärmelasten von einer wärmeerzeugenden Einrichtung an Bord eines Flugzeugs in der Lage.

Ein Kühlluftzufuhrkanal des erfindungsgemäßen Flugzeugkühlsystems verbindet eine in einem Heckbereich eines Flugzeugs ausgebildete Kühlluftzufuhröffnung mit dem Kühllufteinlass des Kühlelements. Unter einem "Heckbereich eines Flugzeugs" wird hier ein relativ zu den Tragflächen des Flugzeugs heckseitiger Flugzeugbereich verstanden. Erfindungsgemäß ist die Kühlluftzufuhröffnung im Bereich eines Heckspiegels des Flugzeugs angeordnet. Der Kühlluftzufuhrkanal kann durch eine Rohrleitung begrenzt sein. Bei entsprechender Anordnung des Kühlelements bzw. des Lufteinlasses des Kühlelements relativ zu der Kühlluftzufuhröffnung kann jedoch gegebenenfalls auch auf eine Rohrleitung zur Begrenzung des Kühlluftzufuhrkanals verzichtet werden.

Im Flugbetrieb eines Flugzeugs wirkt üblicherweise auf einen Bugbereich des Flugzeugs ein verhältnismäßig hoher Druck. Im Gegensatz dazu bildet sich entlang der im Flugbetrieb des Flugzeugs umströmten Flugzeugrumpfkontur üblicherweise ein Unterdruck aus. Auf eine im Heckbereich des Flugzeugs ausgebildete Kühlluftzufuhröff nung wirkt schließlich ein Druck, der geringer ist als der auf den Bugbereich des Flugzeugs wirkende Druck, aber höher als der sich entlang der umströmten Flugzeugrumpfkontur einstellende Unterdruck. Die Druckverhältnisse im Bereich der Kühlluftzufuhröffnung können somit in vorteilhafter Weise dazu genutzt werden, Umgebungsluft durch die Kühlluftzufuhröffnung und den Kühlluftzufuhrkanal zum Kühllufteinlass des Kühlelements zu fördern. Gleichzeitig ist eine im Heckbereich des Flugzeugs ausgebildete Kühlluftzufuhröffnung weniger verschmutzungsanfällig als eine im Flugbetrieb des Flugzeugs einem höheren Druck ausgesetzte Kühlluftzufuhröffnung im Bugbereich des Flugzeugs. Darüber hinaus kann eine im Heckbereich des Flugzeugs ausgebildete Kühlluftzufuhröffnung einen lediglich geringen zusätzlichen Luftwiderstand verursachen. Bei einer im Bereich eines Flugzeugheckspiegels angeordneten Kühlluftzufuhröffnung strömt die Kühlluft im Flugbetrieb des Flugzeugs entlang der Flugzeugkontur entgegen der Flugrichtung. Infolgedessen besteht für eine im Bereich eines Flugzeugheckspiegels angeordnete Kühlluftzufuhröffnung im Flugbetrieb des Flugzeugs eine lediglich geringe Vereisungsgefahr.

Schließlich umfasst das erfindungsgemäße Flugzeugkühlsystem einen Kühlluftauslasskanal, der die Wärmetauscher des Kühlelements mit einer Kühlluftabfuhröffnung verbindet. Der Kühlluftauslasskanal dient somit dazu, nach dem Durchströmen der Wärmetauscher des Kühlelements erwärmte Kühlluft in die Umgebung zurückzuführen. Ähnlich wie der Kühlluftzufuhrkanal kann auch der Kühlluftauslasskanal durch eine Rohrleitung begrenzt sein. Bei entsprechender Anordnung des Kühlelements im Flugzeug kann jedoch gegebenenfalls auch auf eine Rohrleitungsbegrenzung des Kühlluftauslasskanals verzichtet werden.

Die Kühlluftabfuhröffnung ist in einem Bereich einer Rumpfunterschale des Flugzeugs ausgebildet, auf den im Flugbetrieb des Flugzeugs ein geringerer Druck wirkt, als auf die im Bereich des Heckspiegels des Flugzeugs angeordnete Kühlluftzufuhröffnung. Die Differenz zwischen dem auf die Kühlluftzufuhröffnung wirkenden Druck und dem im Bereich der Kühlluftabfuhröffnung vorherrschenden Druck kann dann in vorteilhafter Weise dazu genutzt werden, Umgebungsluft durch die Kühlluftzufuhröffnung und den Kühlluftzufuhrkanal zum Kühllufteinlass des Kühlelements zu fördern und die Kühlluft nach dem Durchströmen der Wärmetauscher des Kühlelements durch den Kühlluftauslasskanal und die Kühlluftabfuhröffnung wieder an die Umgebung abzuführen. Das erfindungsgemäße Flugzeugkühlsystem zeichnet sich dann durch einen verringerten Bedarf an elektrischer Leistung zum Antreiben einer Kühlluftfördereinrichtung aus.

Vorzugsweise ist die Kühlluftabfuhröffnung in einem Abschnitt der Flugzeugrumpfunterschale angeordnet, der an das Kühlelement angrenzt oder sich zumindest in dessen Nähe befindet. Eine im Bereich eines Flugzeugheckspiegels angeordnete Kühlluftzufuhröffnung und eine im Bereich einer Flugzeugrumpfunterschale angeordnete Kühlluftabfuhröffnung ermöglichen eine optimale Ausnutzung des Differenzdrucks zwischen der Kühlluftzufuhröffnung und der Kühlluftabfuhröffnung. Darüber hinaus ist ein besonders guter Schutz vor Verschmutzung gewährleistet.

Vorzugsweise umfasst das Kühlelement einen im Bereich des Kühllufteinlasses angeordneten Ventilator. Der Ventilator kann als Radialventilator, Diagonalventilator oder, bei einem flach ausgebildeten Kühlelement, auch als Querstromventilator ausgebildet sein. Ferner ist eine Ausbildung des Ventilators als Axialventilator denkbar. Ein vorzugsweise als Radialventilator ausgebildeter Ventilator dient dazu, den Kühlluftzufuhrkanal durchströmende Luft in den Kühllufteinlass des Kühlelements zu saugen und anschließend in bezüglich einer Drehachse des Radialventilators radialer Richtung durch die an den Seitenflächen des Kühlelementgehäuses angeordnete Wärmetauscher zu drücken. Der Ventilator kann als Verdichter ausgebildet sein. Mit Hilfe des Ventilators kann auch dann eine ordnungsgemäße Zufuhr von Kühlluft zum Kühllufteinlass des Kühlelements gewährleistet werden, wenn die Druckverhältnisse im Bereich der Kühlluftzufuhröffnung und der Kühlluftabfuhröffnung, beispielsweise im Bodenbetrieb des Flugzeugs, keine ausreichende Kühlluftförderung durch das Kühlelement ermöglichen.

In dem Kühlluftzufuhrkanal des erfindungsgemäßen Flugzeugkühlsystems kann ein weiterer Ventilator angeordnet sein. Ähnlich wie der Kühlelementventilator kann auch der weitere Ventilator als Radialventilator, Diagonalventilator oder Querstromventilator ausgebildet sein. Ferner ist eine Ausbildung des Ventilators als Axialventilator denkbar. Der weitere Ventilator dient dazu, Kühlluft durch den Kühlluftzufuhrkanal in Richtung des in dem Kühlelementgehäuse ausgebildeten Kühllufteinlass zu fördern. Der weitere Ventilator gewährleistet eine hohe Systemredundanz, da er auch bei ungünstigen Druckverhältnissen im Bereich der Kühlluftzufuhröffnung bzw. der Kühlluftabfuhröffnung und/oder bei einem Ausfall des Kühlelementventilators eine ausreichende Kühlluftzufuhr zum Kühllufteinlass des Kühlelements ermöglicht. Dadurch ist in allen Betriebszuständen des Flugzeugs, d.h. auch im Bodenbetrieb, eine optimale Funktion des Flugzeugkühlsystems sichergestellt. Darüber hinaus ist es möglich, den weiteren Ventilator, beispielsweise im Bodenbetrieb des Flugzeugs, anstelle des Ventilators des Kühlelements zur Förderung von Kühlluft zu nutzen und dadurch gegebenenfalls Geräuschemissionen zu verringern.

Bei einer alternativen Ausführungsform eines Flugzeugkühlsystems, die nicht Gegenstand der Erfindung ist, kann die Kühlluftzufuhröffnung im Bereich eines Seitenleitwerks oder eines Triebwerkspylons des Flugzeugs angeordnet sein. Beispielsweise kann die Kühllufrzufuhröffnung im Bereich einer Vorderkante des Seitenleitwerks oder im Bereich einer Vorderkante eines Triebwerkspylons angeordnet sein, das dazu dient, ein Triebwerk im Heckbereich des Flugzeugs am Flugzeugrumpf zu befestigen. Das erfindungsgemäße Flugzeugkühlsystem kann lediglich eine Kühlluftrufuhröffnung umfassen. Falls gewünscht, können jedoch auch zwei oder mehr Kühlluftzufuhröffnungen vorgesehen sein. Beispielsweise können zwei Triebwerkspylons, die dazu dienen, je ein Triebwerk am Flugzeugrumpf zu befestigen, mit je einer Kühlluftzufuhröffnung versehen sein. Vorzugsweise ist jede Kühlluftzufuhröffnung über einen entsprechenden Kühlluftzufuhrkanal mit dem Lufteinlass des Kühlelements verbunden.

Der Kühlluftzufuhrkanal kann in Form eines Stauluftkanals ausgebildet sein. Die Kühlluftzufuhröffnung kann dann beispielsweise als NACA (National Advisory Committee for Aeronautics)-Kühlluftzufuhröffnung ausgeführt sein. Darüber hinaus kann der als Stauluftkanal ausgebildete Kühlluftzufuhrkanal einen Diffusor umfassen. Im Flugbetrieb des Flugzeugs durchströmt dann über die Kühlluftzufuhröffnung in den Kühlluftzufuhrkanal eintretende Kühlluft den Kühlluftzufuhrkanal mit einer sich im Bereich des Diffusors verlangsamenden Strömungsgeschwindigkeit. Infolgedessen wandelt sich im Diffusor ein dynamischer Anteil des Drucks teilweise in statischen Druck um, so dass gegenüber dem Umgebungsdruck ein auch als Staudruck bezeichneter statischer Überdruck entsteht. Dieser Staudruck bewirkt bzw. unterstützt die Strömung der Kühlluft in Richtung des Kühlelements bzw. durch die Wärmetauscher des Kühlelements.

Zur Steuerung der Kühlluftströmung durch die Kühlluftzufuhröffnung kann die Kühlluftzufuhröffnung mit einem beispielsweise in Form einer Klappe ausgebildeten Verschlusselement ausgestattet sein. Das Verschlusselement ist vorzugsweise dazu eingerichtet, die Kühlluftzufuhröffnung, je nach Bedarf, entweder zu verschließen oder mit einem gewünschten Strömungsquerschnitt freizugeben. Vorzugsweise ermöglicht das Verschlusselement eine stufenlose Einstellung des Strömungsquerschnitts der Kühlluftzufuhröffnung. In ähnlicher Weise kann die Kühlluftabfuhröffnung mit einem beispielsweise ebenfalls in Form einer Klappe ausgebildeten Verschlusselement versehen sein. Das Verschlusselement der Kühlluftabfuhröffnung kann, ähnlich wie das Verschlusselement der Kühlluftzufuhröffnung dazu eingerichtet sein, den Strömungsquerschnitt der Kühlluftabfuhröffnung entweder zu verschließe oder, je nach Bedarf, vollständig oder teilweise freizugeben. Vorzugsweise ist wiederum eine stufenlose Einstellung des Strömungsquerschnitts der Kühlluftabfuhröff nung möglich. Durch die Verschlusselemente kann die Einstellung der gewünschten Druckverhältnisse im Bereich der Kühlluftzufuhröffnung und der Kühlluftabfuhröff nung unterstützt werden.

Die Kühlluftzufuhröffnung kann in Form einer oberflächenbündigen frontal angeordneten Scoop-Kühlluftzufuhröffnung ausgebildet sein. Eine derartige Ausgestaltung der Kühlluftrufuhröffnung bietet sich insbesondere dann an, wenn die Kühlluftzufuhröffnung im Bereich des Flugzeugseitenleitwerks oder im Bereich eines Triebwerkspylons des Flugzeugs angeordnet ist.

In dem Kühlluftzufuhrkanal kann eine Kühlluftmassenstromumlenkvorrichtung angeordnet sein. Die Kühlluftmassenstromumlenkvorrichtung ist vorzugsweise dazu eingerichtet, in einer ersten Stellung den den Kühlluftzufuhrkanal durchströmenden Kühlluftmassenstrom in Richtung des Kühllufteinlasses des Kühlelements zu lenken. In einer zweiten Stellung ist die Kühlluftmassenstromumlenkvorrichtung dagegen vorzugsweise dazu eingerichtet, den den Kühlluftzufuhrkanal durchströmenden Kühlluftmassenstrom an dem Kühlelement vorbei und beispielsweise in Richtung eines weiteren redundanten Kühlelements zu lenken. Das weitere redundante Kühlelement kann den gleichen Aufbau aufweisen wie das Kühlelement. Beispielsweise ist die Kühlluftmassenstromumlenkvorrichtung dazu eingerichtet, bei einem Ausfall des Kühlelements des erfindungsgemäßen Flugzeugkühlsystems in ihre zweite Stellung bewegt zu werden, um den den Kühlluftzufuhrkanal durchströmenden Kühlluftmassenstrom in Richtung des weiteren redundanten Kühlelements zu lenken und dadurch auch bei einem Versagen des Kühlelements für eine ordnungsgemäße Funktion des erfindungsgemäßen Flugzeugkühlsystems zu sorgen. Die Kühlluftmassenstromumlenkvorrichtung kann mit Hilfe eines Elektromotors zwischen ihrer ersten und ihrer zweiten Stellung bewegbar sein. Aus Redundanzgründen können zwei Elektromotoren, die beispielsweise auf einer gemeinsamen Welle angeordnet sein können, vorgesehen sein, um bei Bedarf Kühlluftmassenstromumlenkvorrichtung zwischen ihrer ersten und ihrer zweiten Stellung zu bewegen.

Das erfindungsgemäße Flugzeugkühlsystem kann ferner eine Einrichtung zur Nutzung der in der Kühlluft nach dem Durchströmen der Wärmetauscher des Kühlelements gespeicherten Wärme umfassen. Die Einrichtung zur Nutzung der in der Kühlluft nach dem Durchströmen der Wärmetauscher des Kühlelements gespeicherten Wärme kann beispielsweise eine Triebwerksvorheizeinrichtung, eine Brennstoffvorheizeinrichtung oder eine Vorrichtung zur Einspritzung von Wasser in ein Flugzeugtriebwerk sein. Die nach dem Durchströmen der Wärmetauscher des Kühlelements erwärmte Kühlluft kann beispielsweise unmittelbar zur Vorheizung eines im Heckbereich des Flugzeugs angeordneten Triebwerks genutzt werden. Alternativ dazu kann in der Triebwerksvorheizeinrichtung auch nur die in der Kühlluft gespeicherte Wärme, beispielsweise mittels eines Wärmetauschers, auf ein weiteres Medium zur Vorheizung des Triebwerks übertragen werden. In ähnlicher Weise kann die nach dem Durchströmen der Wärmetauscher des Kühlelements erwärmte Kühlluft unmittelbar dazu genutzt werden, den Triebwerken des Flugzeugs oder einem an Bord des Flugzeugs vorgesehenen Brennstoffzellensystem zuzuführenden Brennstoff vorzuheizen. Alternativ dazu kann jedoch auch wiederum nur die in der Kühlluft gespeicherte Wärme, beispielsweise mittels eines geeigneten Wärmetauschers, in der Brennstoffvorheizeinrichtung auf ein weiteres Medium zur Brennstoffvorheizung übertragen werden. In einer Vorrichtung zur Beheizung von in ein Flugzeugtriebwerk einzuspritzendem Wasser kann die in der Kühlluft nach dem Durchströmen der Wärmetauscher des Kühlelements gespeicherte Wärme in vorteilhafter Weise entweder direkt oder indirekt dazu genutzt werden, das in das Triebwerk einzuspritzende Wasser vorzuheizen oder von Wasser durchströmte Rohrleitungen der Wassereinspritzvorrichtung vor Vereisung zu schützen.

Bei einer besonders bevorzugten Ausführungsform des erfindungsgemäßen Flugzeugkühlsystems ist mindestens ein Wärmetauscher des Kühlelements in einen Kühlkreislauf eines Brennstoffzellensystems, d.h. einen Kühlkreislauf, der dazu dient, im Betrieb einer Brennstoffzelle entstehende Abwärme von der Brennstoffzelle abzuführen, integriert. Aufgrund seiner hohen Kühlleistung ist das erfindungsgemäße Flugzeugkühlsystem dazu geeignet, die im Betrieb einer Brennstoffzelle entstehenden hohen Wärmelasten zuverlässig von der Brennstoffzelle abzuführen. Die Wärmetauscher des Kühlelements können dabei als redundante Einrichtungen gestaltet sein, um auch bei einem Ausfall eines Wärmetauschers oder mehrerer Wärmetauscher des Kühlelements eine ordnungsgemäße Kühlung des Brennstoffizellensystems zu gewährleisten.

Zusätzlich oder alternativ dazu ist es ferner möglich, einen oder mehrere Wärmetauscher des Kühlelements in einen Kühlkreislauf einer Flugzeugklimaanlage, einen Triebwerkskühlkreislauf, einen Kühlkreislauf zur Wasserkondensation und Wassergewinnung und/oder einen Kühlkreislauf zur Kühlung elektronischer Komponenten an Bord des Flugzeugs zu integrieren. Das erfindungsgemäße Flugzeugkühlsystem, das beispielsweise vorrangig dazu dienen kann, einem Brennstoffzellensystem an Bord des Flugzeugs die erforderliche Kühlenergie zu liefern, kann somit in vorteilhafter Weise mit anderen an Bord des Flugzeugs vorhandenen Kühlsystemen kombiniert werden und dadurch auch anderen Verbrauchern Kühlleistung bereitstellen.

Grundsätzlich können die Wärmetauscher des Kühlelements unmittelbar in die Kühlkreisläufe verschiedener an Bord des Flugzeugs vorgesehener Kühlsysteme integriert werden. Alternativ dazu ist jedoch auch die Übertragung von Kühlenergie an Zwischenkühler denkbar. Die Nutzung von Zwischenkühlern ist insbesondere dann sinnvoll, wenn ein Wärmetauscher des Kühlelements aus Sicherheitsgründen nicht unmittelbar in einen Kühlkreislauf eines an Bord des Flugzeugs vorgesehenen Kühlsystems, beispielsweise einen Ölkühlkreislauf, integriert werden soll. Insbesondere dann, wenn die Wärmetauscher des Kühlelements in einen Triebwerkskühlkreislauf integriert sind, muss die Leitungsführung so erfolgen, dass in allen Betriebszuständen eine ordnungsgemäße Kühlfunktion gewährleistet ist und beispielsweise eine Beschädigung der Leitungen durch Triebwerksteile oder dergleichen ausgeschlossen ist. Das erfindungsgemäße Flugzeugkühlsystem kann in Abhängigkeit der an seine Kühlleistung gestellten Anforderungen ausgelegt und modularisierbar gestaltet werden. Darüber hinaus ist eine optimale Anpassung des Systems an die das System umgebenden Strukturen möglich.

Vorzugsweise umfasst das erfindungsgemäße Flugzeugkühlsystem ferner eine Einrichtung zur Strömungsbeeinflussung an einem Triebwerkspylon. Die Einrichtung zur Strömungsbeeinflussung kann mit dem Kühlluftauslasskanal und/oder der Kühlluftabfuhröffnung verbunden sein. Alternativ dazu kann die Einrichtung zur Strömungsbeeinflussung auch unmittelbar mit den Wärmetauschern des Kühlelements verbunden sein, um aus den Wärmetauschern austretende Kühlluft aufzunehmen und einem Triebwerkspylon oder mehreren Triebwerkspylons zuzuführen. Durch eine gezielte Beeinflussung der Strömung im Bereich eines Triebwerkspylons kann eine vorteilhafte Reduzierung der Geräuschimmissionen bewirkt werden.

Drei bevorzugte Ausführungsbeispiele eines erfindungsgemäßen Flugzeugkühlsystems werden nun anhand der beigefügten schematischen Zeichnungen näher erläutert, von denen
- Figur 1: eine dreidimensionale Ansicht eines Kühlelements eines Flugzeugkühlsystems zeigt,
- Figur 2: ein Flugzeugkühlsystem mit einer im Bereich eines Flugzeugheckspiegels angeordneten Kühlluftzufuhröffnung zeigt,
- Figur 3: ein Flugzeugkühlsystem mit einer im Bereich eines Flugzeugheckspiegels angeordneten Kühlluftzufuhröffnung und einem in einem Kühlluftzufuhrkanal angeordneten Axialventilator zeigt,
- Figur 4: ein Flugzeugkühlsystem mit einer im Bereich eines Seitenleitwerks angeordneten Kühlluftzufuhröffnung zeigt, und
- Figur 5: ein Flugzeugkühlsystem mit zwei im Bereich zweier Triebwerkspylons angeordneten Kühlluftzufuhröffnungen zeigt.

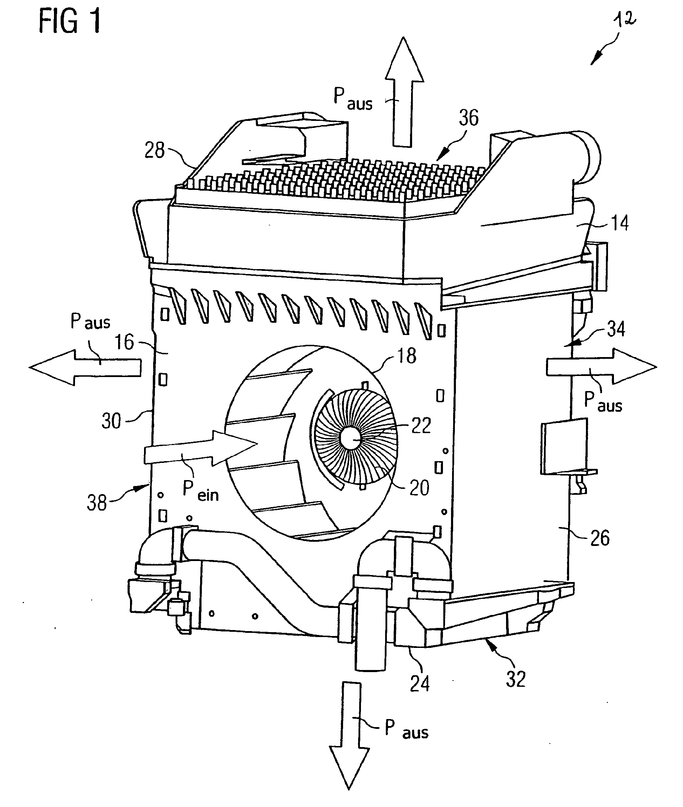

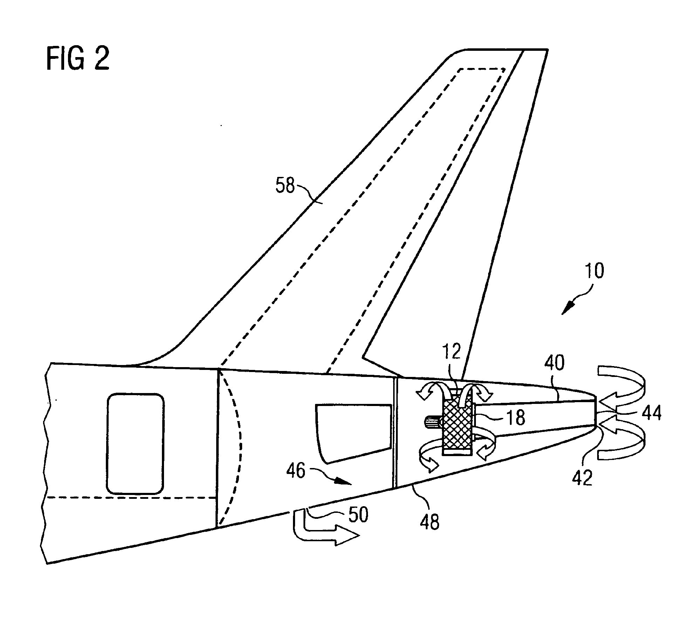

Figur 1 zeigt ein zur Verwendung in einem in den Figuren 2 bis 5 veranschaulichten Flugzeugkühlsystem 10 geeignetes Kühlelement 12. Das Kühlelement 12 umfasst ein im Wesentlichen quaderförmiges Gehäuse 14. Eine vordere Seitenfläche 16 des Kühlelements 12 ist mit einem Kühllufteinlass 18 versehen. Im Bereich des Kühllufteinlasses 18 ist ein Radialventilator 20 angeordnet. Der Radialventilator 20 dient dazu, wie durch den Pfeil Pᵢₙ in Figur 1 angedeutet, Kühlluft in Richtung des Kühllufteinlasses 18 zu saugen und anschließend, wie durch die Pfeile Pₒᵤₜ in Figur 1 angedeutet, bezüglich einer Drehachse 22 des Radialventilators 20 radial nach außen zu drücken. An die vordere Seitenfläche 16 angrenzende Seitenflächen 24, 26, 28, 30 des Kühlelements 12 sind jeweils mit Wärmetauschern 32, 34, 36, 38 versehen. Durch den Kühllufteinlass 18 in das Gehäuse 14 des Kühlelements 12 eintretende Kühlluft durchströmt die Wärmetauscher 32, 34, 36, 38 und gibt dabei unter relativ geringen Druckverlusten Kühlenergie an ein durch Kühlkanäle der Wärmetauscher strömendes zu kühlendes Medium ab.

Wie aus den Figuren 2 bis 5 hervorgeht, ist das Kühlelement 12 des Flugzeugkühlsystems 10 in einem Heckabschnitt des Flugzeugrumpfs angeordnet. Diese Anordnung des Kühlelements 12 bietet sich an, da das Flugzeugkühlsystem 10 dazu dient, ein eine APU des Flugzeugs ersetzendes, in den Figuren nicht gezeigtes Brennstoffzellensystem zu kühlen. Der üblicherweise für die Aufnahme der APU genutzte Einbauraum in einem Heckabschnitt des Flugzeugrumpfs kann daher als Einbauraum für das Kühlelement 12 des Flugzeugkühlsystems 10 dienen.

In dem in Figur 2 gezeigten Flugzeugkühlsystem 10 ist der Kühllufteinlass 18 des Kühlelements 12 mit einem in Form eines Stauluftkanals ausgebildeten Kühlluftzufuhrkanal 40 verbunden. Der Kühlluftzufuhrkanal 40 mündet in eine im Bereich eines Flugzeugheckspiegels 42 ausgebildete Kühlluftzufuhröffnung 44. Die Kühlluftzufuhröffnung 44 ist mit einem in Form einer Klappe ausgebildeten Verschlusselement versehen, das dazu dient, die Kühlluftzufuhröffnung 44 zu verschließen oder mit einem gewünschten variablen Strömungsquerschnitt freizugeben.

Nach dem Durchströmen der Wärmetauscher 32, 34, 36, 38 des Kühlelements 12 wird die dem Kühlelement 12 über den Kühlluftzufuhrkanal 40 zugeführte Kühlluft über einen Kühlluftauslasskanal 46 zu einer in einer Flugzeugrumpfunterschale 48 ausgebildeten Kühlluftabfuhröffnung 50 geleitet. Ähnlich wie die Kühlluftzufuhröffnung 44 ist auch die Kühlluftabfuhröffnung 50 mit einem in Form einer Klappe ausgebildeten Verschlusselement versehen, das dazu dient, die Kühlluftabfuhröffnung 50 entweder zu verschließen oder mit einem gewünschten variablen Strömungsquerschnitt freizugeben.

Im Flugbetrieb des Flugzeugs wirkt auf die im Bereich des Heckspiegels 42 des Flugzeugs angeordnete Kühlluftzufuhröffnung 44 ein höherer Druck als auf die in der Flugzeugrumpfunterschale 48 ausgebildete Kühlluftabfuhröffnung 50. Diese Druckdifferenz kann in vorteilhafter Weise dazu genutzt werden, die Kühlluft durch das Kühlelement 12 des Flugzeugkühlsystems 10 zu fördern. Im Bodenbetrieb des Flugzeugs sorgt der Radialventilator 20 des Kühlelements 12 für eine ordnungsgemäße Kühlluftzufuhr zu dem Kühlelement 12. Die im Bereich des Flugzeugheckspiegels 42 ausgebildete Kühllufäufuhröffnung 44 ist im Vergleich zu einer in einem Bugbereich des Flugzeugs angeordneten Kühlluftzufuhröffnung weniger verschmutzungsanfällig. Darüber hinaus besteht aufgrund der Strömungsverhältnisse im Bereich der Kühlluftzufuhröffnung 44, d.h. aufgrund der Kühlluftströmungsrichtung entgegen der Flugrichtung vor dem Eintritt in die Kühlluftzufuhröffnung 44 eine verringerte Vereisungsgefahr. Schließlich kann die im Bereich des Flugzeugheckspiegels 42 angeordnete Kühlluftzufuhröffnung 44 einen geringen zusätzlichen Luftwiderstand haben.

Wie bereits erwähnt, dient das Flugzeugkühlsystem 10 als Kühlsystem für ein an Bord des Flugzeugs angeordnetes Brennstoffzellensystem. Mindestens zwei Wärmetauscher 32, 34 des Kühlelements 12 sind daher in einen Kühlkreislauf zur Kühlung einer Brennstoffzelle integriert, wobei die Wärmetauscher 32, 34 als redundante Kühleinrichtungen dienen. Dadurch wird auch bei einem Ausfall eines Wärmetauschers 32, 34 durch den anderen Wärmetauscher 34, 32 eine ordnungsgemäße Kühlung des Brennstoffzellensystems und insbesondere der in dem Brennstoffzellensystem vorgesehenen Brennstoffzelle gewährleistet.

Die verbleibenden Wärmetauscher 36, 38 des Kühlelements 12 sind in einen Kreislauf einer Flugzeugklimaanlage sowie einen Triebwerkskühlkreislauf integriert. Alternativ dazu können die Wärmetauscher 36, 38 auch in einen Kühlkreislauf zur Kühlung elektronischer Komponenten an Bord des Flugzeugs oder einen beliebigen anderen an Bord des Flugzeugs vorgesehenen Kühlkreislauf integriert sein. Die von dem Flugzeugkühlsystem 10 erzeugte Kühlleistung kann somit mehreren Verbrauchern an Bord des Flugzeugs zugeführt werden. Die Wärmetauscher 36, 38 können unmittelbar in die entsprechenden Kühlkreisläufe integriert sein. Falls dies aus Sicherheitsgründen erforderlich oder aus anderen Gründen gewünscht ist, können die Wärmetauscher 36, 38 des Kühlelements 12 jedoch auch thermisch mit einem Zwischenkühler gekoppelt sein, um über den Zwischenkühler indirekt Kühlenergie an die Kühlkreisläufe abzugeben.

In dem Kühlluftzufuhrkanal 40 ist eine in Figur 2 nicht gezeigte Kühlluftmassenstromumlenkvorrichtung angeordnet. In einer ersten Stellung lenkt die elektromotorisch angetriebene Kühlluftmassenstromumlenkvorrichtung die den Kühlluftzufuhrkanal 40 durchströmende Kühlluft in Richtung des Kühlelements 12. In einer zweiten Stellung sperrt die Kühlluftmassenstromumlenkvorrichtung das Kühlelement 12 dagegen von dem Kühlluftzufuhrkanal 40 ab und sorgt dafür, dass die den Kühlluftzufuhrkanal 40 durchströmende Kühlluft zu einem in Figur 2 nicht gezeigten weiteren redundanten Kühlelement 12 geleitet wird. Dadurch wird auch bei einem Ausfall des Kühlelements 12 eine ordnungsgemäße Funktion des Flugzeugkühlsystems 10 gewährleistet.

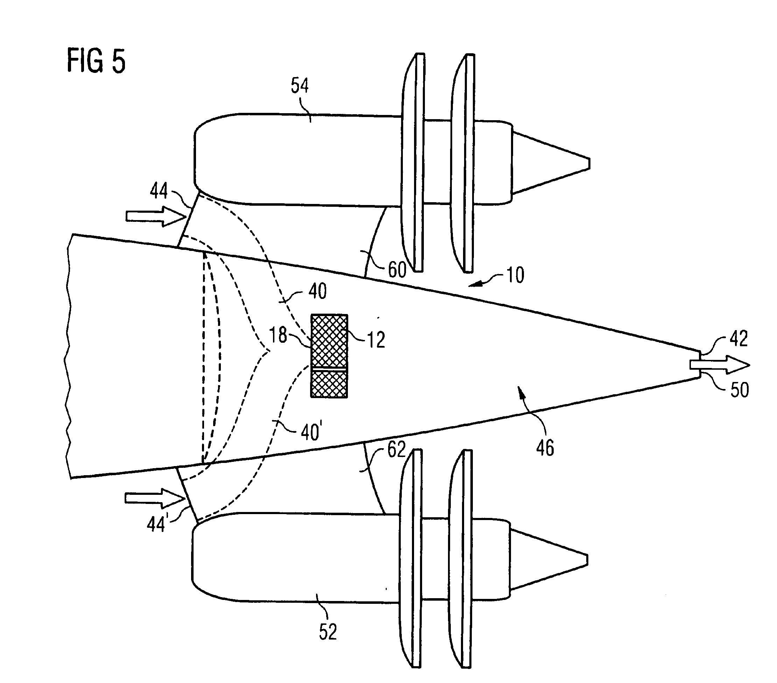

Die nach dem Durchströmen der Wärmetauscher 32, 34, 36, 38 des Kühlelements 12 erwärmte Kühlluft wird zur Vorheizung zweier lediglich in Figur 5 veranschaulichter im Heckbereich des Flugzeugs angeordneter Triebwerke 52, 54 sowie zur Vorheizung von den Triebwerken 52, 54 zuzuführendem Brennstoff genutzt. Darüber hinaus dient die beim Durchströmen der Wärmetauscher 32, 34, 36, 38 des Kühlelements 12 erwärmte Kühlluft dazu, in einer Wassereinspritzvorrichtung in die Triebwerke 52, 54 zur Emissionsminderung einzuspritzendes Wasser vorzuheizen sowie wasserdurchströmte Rohrleitungen der Wassereinspritzvorrichtung vor Vereisung zu schützen.

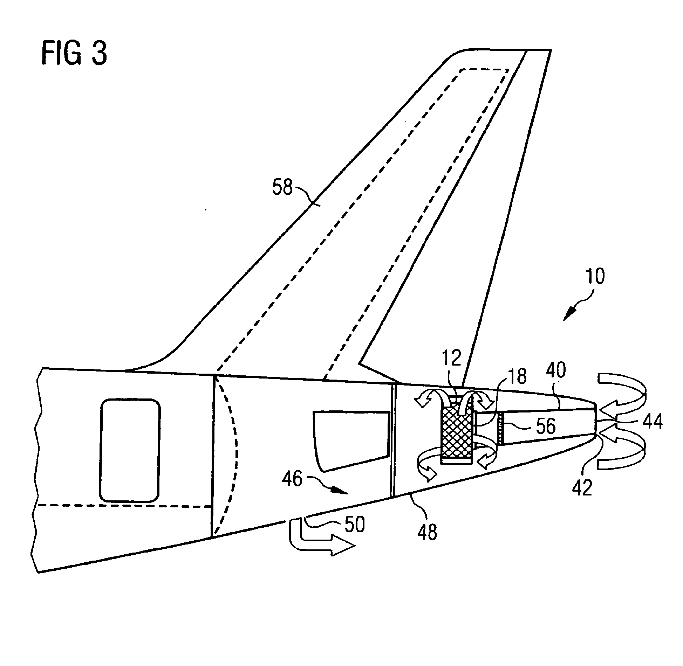

Das in Figur 3 gezeigte Flugzeugkühlsystem 10 unterscheidet sich von der in Figur 2 veranschaulichten Anordnung dadurch, dass in dem Kühlluftzufuhrkanal 40 zusätzlich ein Axialventilator 56 angeordnet ist. Der Axialventilator 56 unterstützt die Kühlluftströmung durch den Kühlluftzufuhrkanal 40 in Richtung des Kühllufteinlasses 18 des Kühlelements 12. Der Axialventilator 56 sorgt somit für eine gewisse Redundanz zu dem Radialventilator 20 des Kühlelements 12 und stellt auch im Bodenbetrieb des Flugzeugs, wenn keine Druckdifferenzen zwischen der Kühlluftzufuhröffnung 44 und der Kühlluftabfuhröffnung 50 zur Förderung der Kühlluft durch das Kühlelement 12 genutzt werden kann, für einen ausreichenden Kühlluftmassenstrom. Im Übrigen entsprechen der Aufbau und die Funktionsweise des in Figur 3 gezeigten Flugzeugkühlsystems 10 dem Aufbau und der Funktionsweise der Anordnung gemäß Figur 2.

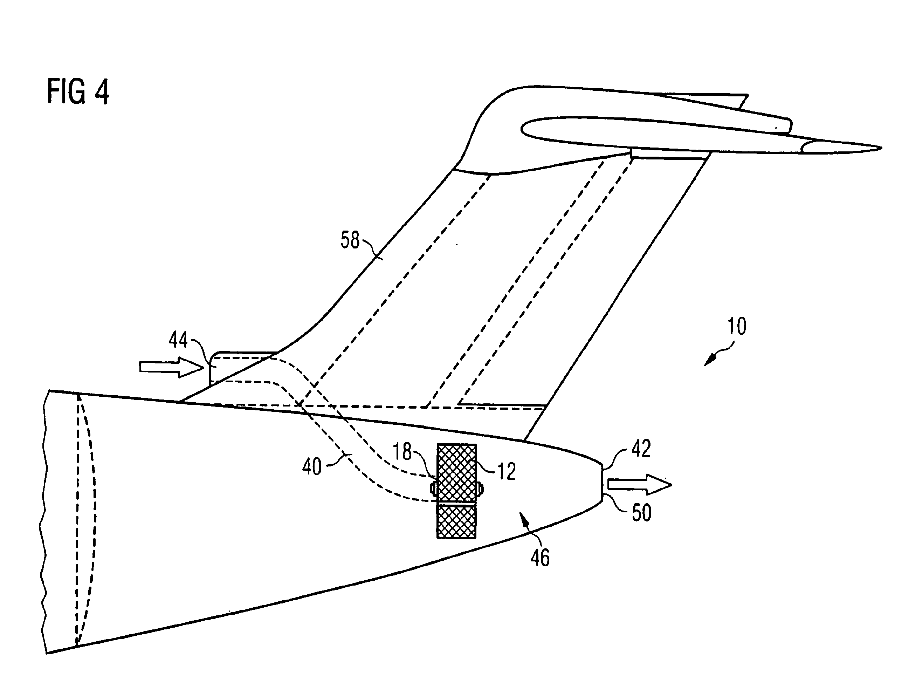

Anders als bei der in den Figuren 2 und 3 dargestellten Anordnung ist bei dem in Figur 4 veranschaulichten Flugzeugkühlsystem 10 die Kühlluftzufuhröffnung 44 im Bereich einer Vorderkante des Flugzeugseitenleitwerks 58 angeordnet. Die Kühlluftzufuhröffnung 44 kann in Form einer oberflächenbündigen Scoop-Kühlluftzufuhröffnung ausgebildet oder als Pitot - bzw. Staulufteinlauf geformt sein. Die Kühlluftabfuhröffnung 50 befindet sich dagegen im Bereich des Flugzeugheckspiegels 42. Auch bei dieser Anordnung kann im Flugbetrieb des Flugzeugs eine Differenz zwischen dem auf die Kühlluftzufuhröffnung 44 wirkenden Druck und dem im Bereich der Kühlluftabfuhröffnung 50 vorherrschenden Druck dazu genutzt werden, den Kühlluftmassenstrom durch das Kühlelement 12 zu fördern. Im Übrigen entsprechen der Aufbau und die Funktionsweise des in Figur 4 gezeigten Flugzeugkühlsystems 10 dem Aufbau und der Funktion der in den Figuren 2 und 3 gezeigten Anordnungen.

Das in Figur 5 dargestellte Flugzeugkühlsystem 10 unterscheidet sich schließlich von der Anordnung gemäß Figur 4 dadurch, dass das Flugzeugkühlsystem 10 anstelle einer im Bereich des Seitenleitwerks 58 des Flugzeugs angeordneten Kühlluftzufuhröffnung 44 zwei Kühlluftzufuhröffnungen 44, 44' umfasst, die in zwei die Triebwerke 52, 54 tragenden Pylons 60, 62 ausgebildet sind. Die Kühlluftzufuhröffnungen 44, 44' sind durch zwei Kühlluftzufuhrkanäle 40, 40' mit dem Kühllufteinlass 18 des Kühlelements 12 verbunden. Die Kühlluftabfuhr erfolgt, wie bei der in Figur 4 gezeigten Anordnung, durch eine im Bereich des Flugzeugheckspiegels 42 ausgebildete Kühlluftabfuhröffnung 50. Wiederum kann im Flugbetrieb des Flugzeugs eine Druckdifferenz zwischen den Kühlluftzufuhröffnungen 44, 44' und der Kühlluftabfuhröffnung 50 zur Förderung des Kühlluftmassenstroms durch das Kühlelement 12 genutzt werden. Ein Teil der Abluft kann auch zur Strömungsbeeinflussung an den Triebwerksträgern durch z.B. Luftausblasung mitverwendet werden.

## Patentansprüche

1. Flugzeug mit einem Flugzeugkühlsystem (10), weiches umfasst:
- ein Kühlelement (12),
- einen Kühlluftzufuhrkanal (40), der eine im Bereich eines Heckspiegels (42) des Flugzeugs ausgebildete Kühlluftzufuhröffnung (44) mit dem Kühllufteinlass (18) des Kühlelements (12) verbindet, und
- einen Kühlluftauslasskanal (46),
**dadurch gekennzeichnet, dass** das Kühlelement (12) ein Gehäuse (14), einen in dem Gehäuse (14) ausgebildeten Kühllufteinlass (18) sowie eine Mehrzahl von an Seitenflächen (24, 26, 28, 30) des Gehäuses (14) angeordneten Wärmetauschem (32, 34, 36, 38) umfasst, die von über den Kühllufteinlass (18) zugeführter Kühlluft durchströmbar sind, und dass der Kühlluftauslasskanal (46) die Wärmetauscher (32, 34, 36, 38) des Kühlelements (12) mit einer Kühlluftabfuhröffnung (50) verbindet, die in einem Bereich einer Flugzeugrumpfunterschale (48) angeordnet ist, auf den im Flugbetrieb des Flugzeugs ein geringerer Druck wirkt als auf die im Bereich des Heckspiegels (42) des Flugzeugs angeordnete Kühlluftzufuhröffnung (44).

2. Flugzeug nach Anspruch 1,
**dadurch gekennzeichnet, dass** das Kühlelement (12) ferner einen im Bereich des Kühllufteinlasses (18) angeordneten Ventilator (20) umfasst.

3. Flugzeug nach Anspruch 1 oder 2,
**dadurch gekennzeichnet, dass** in dem Kühlluftzufuhrkanal (40) ein weiterer Ventilator (56) angeordnet ist.

4. Flugzeug nach einem der Ansprüche 1 bis 3,
**dadurch gekennzeichnet, dass** der Kühlluftzufuhrkanal (40) in Form eines Stauluftkanals ausgebildet ist.

5. Flugzeug nach einem der Ansprüche 1 bis 4,
**dadurch gekennzeichnet, dass** die Kühlluftzufuhröffnung (44) in Form einer Scoop-Luftzufuhröffnung ausgebildet ist.

6. Flugzeug nach einem der Ansprüche 1 bis 5,
**dadurch gekennzeichnet, dass** in dem Kühlluftzufuhrkanal (40) eine Kühlluftmassenstromumlenkvorrichtung angeordnet ist, die dazu eingerichtet ist, in einer ersten Stellung den den Kühlluftzufuhrkanal (40) durchströmenden Kühlluftmassenstrom in Richtung des Kühllufteinlasses (18) des Kühlelements (12) zu lenken, und in einer zweiten Stellung den den Kühlluftzufuhrkanal (40) durchströmenden Kühlluftmassenstrom an dem Kühlelement (12) vorbei zu lenken.

7. Flugzeug nach einem der Ansprüche 1 bis 6,
**gekennzeichnet durch** eine Einrichtung zur Nutzung der in der Kühlluft nach dem Durchströmen der Wärmetauscher (32, 34, 36, 38) des Kühlelements (12) gespeicherten Wärme.

8. Flugzeug nach Anspruch 7,
**dadurch gekennzeichnet, dass** die Einrichtung zur Nutzung der in der Kühlluft nach dem Durchströmen der Wärmetauscher (32, 34, 36, 38) des Kühlelements (12) gespeicherten Wärme eine Triebwerksvorheizeinrichtung, eine Brennstoffvorheizeinrichtung oder eine Vorrichtung zur Beheizung von in ein Flugzeugtriebwerk einzuspritzendem Wasser ist.

9. Flugzeug nach einem der Ansprüche 1 bis 8,
**dadurch gekennzeichnet, dass** die Wärmetauscher (32, 34, 36, 38) des Kühlelements (12) in einen Kühlkreislauf eines Brennstoffzellensystems, einen Kühlkreislauf einer Flugzeugklimaanlage, einen Triebwerkskühlkreislauf, einen Kühlkreislauf zur Wasserkondensation und Wassergewinnung und/oder einen Kühlkreislauf zur Kühlung elektronischer Komponenten an Bord des Flugzeugs integriert sind.

10. Flugzeug nach einem der Ansprüche 1 bis 9,
**gekennzeichnet durch** eine mit dem Kühlluftauslasskanal (46) verbundene Einrichtung zur Strömungsbeeinflussung an einem Triebwerkspylon (60, 62).

## Claims

1. Aircraft having an aircraft cooling system (10), which comprises:
- a cooling element (12),
- a cooling air supply channel (40) that connects a cooling air supply opening (44) formed in the region of a tail face (42) of the aircraft to the cooling air inlet (18) of the cooling element (12), and
- a cooling air outlet channel (46),
**characterized in that** the cooling element (12) comprises a housing (14), a cooling air inlet (18) formed in the housing (14) and a plurality of heat exchangers (32, 34, 36, 38), which are disposed on lateral surfaces (24, 26, 28, 30) of the housing (14) and through which cooling air supplied through the cooling air inlet (18) may flow, and that the cooling air outlet channel (46) connects the heat exchangers (32, 34, 36, 38) of the cooling element (12) to a cooling air discharge opening (50) that is disposed in a region of a fuselage lower shell (48), upon which, while the aircraft is flying, a lower pressure acts than upon the cooling air supply opening (44) disposed in the region of the tail face (42) of the aircraft.

2. Aircraft according to claim 1,
**characterized in that** the cooling element (12) further comprises a fan (20) disposed in the region of the cooling air inlet (18).

3. Aircraft according to claim 1 or 2,
**characterized in that** in the cooling air supply channel (40) a further fan (56) is disposed.

4. Aircraft according to one of claims 1 to 3,
**characterized in that** the cooling air supply channel (40) is configured in the form of a ram air channel.

5. Aircraft according to one of claims 1 to 4,
**characterized in that** the cooling air supply opening (44) is configured in the form of a scoop-type air supply opening.

6. Aircraft according to one of claims 1 to 5,
**characterized in that** disposed in the cooling air supply channel (40) is a cooling air mass flow deflection device, which is devised so as in a first position to guide the cooling air mass flow flowing through the cooling air supply channel (40) in the direction of the cooling air inlet (18) of the cooling element (12), and in a second position to guide the cooling air mass flow flowing through the cooling air supply channel (40) past the cooling element (12).

7. Aircraft according to one of claims 1 to 6,
**characterized by** a device for utilizing the heat stored in the cooling air after flowing through the heat exchangers (32, 34, 36, 38) of the cooling element (12).

8. Aircraft according to claim 7,
**characterized in that** the device for utilizing the heat stored in the cooling air after flowing through the heat exchangers (32, 34, 36, 38) of the cooling element (12) is an engine preheating device, a fuel preheating device or a device for heating water that is to be injected into an aircraft engine.

9. Aircraft according to one of claims 1 to 8,
**characterized in that** the heat exchangers (32, 34, 36, 38) of the cooling element (12) are integrated into a cooling circuit of a fuel cell system, a cooling circuit of an aircraft air conditioning system, an engine cooling circuit, a cooling circuit for water condensation and water generation and/or a cooling circuit for cooling electronic components on board the aircraft.

10. Aircraft according to one of claims 1 to 9,
**characterized by** a device, which is connected to the cooling air outlet channel (46), for influencing flow at an engine pylon (60, 62).

## Revendications

1. Avion pourvu d'un système de refroidissement (10), lequel comprend :
- un élément de refroidissement (12),
- un canal d'alimentation en air froid (40) qui relie une ouverture d'alimentation en air froid (44) réalisée dans la zone d'un tableau arrière (42) de l'avion à l'entrée d'air froid (18) dudit élément de refroidissement (12), et
- un canal de sortie d'air froid (46),
**caractérisé en ce que** l'élément de refroidissement (12) comprend un boîtier (14), une entrée d'air froid (18) réalisée dans ledit boîtier (14) ainsi qu'une pluralité d'échangeurs de chaleur (32, 34, 36, 38) disposés sur les faces latérales (24, 26, 28, 30) du boîtier (14) et aptes à être traversés par l'air froid amené via ladite entrée d'air froid (18), et **en ce que** ledit canal de sortie d'air froid (46) relie lesdits échangeurs de chaleurs (32, 34, 36, 38) de l'élément de refroidissement (12) à une ouverture d'évacuation d'air froid (50) disposée dans une zone de la coque inférieure (48) du fuselage de l'avion, laquelle zone est pendant le vol exposée à une pression plus faible que celle qui agit sur l'ouverture d'alimentation en air froid (44) disposée dans la zone du tableau arrière (42) de l'avion.

2. Avion selon la revendication 1,
**caractérisé en ce que** l'élément de refroidissement (12) comprend en outre un ventilateur (20) disposé dans la zone de l'entrée d'air froid (18).

3. Avion selon la revendication 1 ou 2,
**caractérisé en ce qu'**un ventilateur supplémentaire (56) est disposé dans le canal d'alimentation en air froid (40).

4. Avion selon l'une des revendications 1 à 3,
**caractérisé en ce que** le canal d'alimentation en air froid (40) est réalisé sous la forme d'un canal d'air de refoulement.

5. Avion selon l'une des revendications 1 à 4,
**caractérisé en ce que** l'ouverture d'alimentation en air froid (44) se présente sous la forme d'une ouverture de prise d'air.

6. Avion selon l'une des revendications 1 à 5,
**caractérisé en ce qu'**est disposé dans le canal d'alimentation en air froid (40) un dispositif de déviation du flux des masses d'air froid qui est conçu, dans une première position, pour diriger le flux de masses d'air froid traversant le canal d'alimentation en air froid (40) vers l'entrée d'air froid (18) de l'élément de refroidissement (12) et, dans une deuxième position, pour diriger le flux des masses d'air froid traversant le canal d'alimentation en air froid (40) le long de l'élément de refroidissement (12).

7. Avion selon l'une des revendications 1 à 6,
**caractérisé par** un dispositif permettant d'exploiter la chaleur emmagasinée dans l'air froid après son passage dans les échangeurs de chaleur (32, 34, 36, 38) de l'élément de refroidissement (12).

8. Avion selon la revendication 7,
**caractérisé en ce que** ledit dispositif permettant d'exploiter la chaleur emmagasinée dans l'air froid après son passage dans les échangeurs de chaleur (32, 34, 36, 38) de l'élément de refroidissement (12) est un dispositif destiné à préchauffer les réacteurs ou un combustible, ou un dispositif destiné à chauffer de l'eau à injecter dans un réacteur d'avion.

9. Avion selon l'une des revendications 1 à 8,
**caractérisé en ce que** les échangeurs de chaleur (32, 34, 36, 38) de l'élément de refroidissement (12) sont intégrés dans le circuit de refroidissement d'un système à piles à combustible, un circuit de refroidissement d'un système de climatisation d'avion, un circuit de refroidissement des réacteurs, un circuit de refroidissement pour la condensation et la production d'eau et/ou un circuit de refroidissement pour le refroidissement des composants électroniques à bord de l'avion.

10. Avion selon l'une des revendications 1 à 9,
**caractérisé par** un dispositif qui est relié au canal de sortie d'air froid (46) et destiné à influencer le flux d'air à un pylône de réacteur (60, 62).
